# EUROPÄISCHE PATENTSCHRIFT

(11) **EP 1 227 252 B1**
(45) Veröffentlichungstag und Bekanntmachung des Hinweises auf die Patenterteilung: **21.01.2004**
(21) Anmeldenummer: 01101491.7
(22) Anmeldetag: 24.01.2001
(51) Int. Cl.: F16B 13/12, F16B 19/10

(54) **Spreizniet und Verfahren zu seiner Herstellung**
Blind rivet and and method of producing the same
Rivet aveugle et procédé de sa production

(43) Veröffentlichungstag der Anmeldung: 31.07.2002
(73) Patentinhaber: A. Raymond & Cie, 38028 Grenoble (FR)
(72) Erfinder: Tresorier, Jean-François, 38170 Sessinet-Pariset (FR)
(74) Vertreter: Kirchgaesser, Johannes, Dipl.-Ing.

(56) Entgegenhaltungen:
- FR-A- 2 718 498
- GB-A- 331 334
- GB-A- 711 095
- GB-A- 2 042 885
- US-A- 4 500 238

## Beschreibung

Niete dienen der unlösbaren Verbindung von Werkstücken oder Bauteilen und können dort, wo eine lösbare Verbindung nicht erforderlich oder sogar unerwünscht ist, die Verbindung mittels Schrauben, Scheiben und Muttern ersetzen. Herkömmliche Niete bestehen aus einem Bolzen mit Setzkopf und Nietschaft. Zum Nieten wird der Nietschaft durch die vorher gestanzten oder gebohrten Nietlöcher der zu verbindenden Teile gesteckt, der Niet am bereits vorhandenen Setzkopf mit einem Werkzeug als Gegenhalter festgehalten und das freie Ende des Schaftes durch Druck- oder Schlagwirkung zum Schließkopf verformt. Diese Art der Vernietung kann nur an Nietstellen vorgenommen werden, die von beiden Seiten zugänglich sind.

Für Verbindungsstellen, die nur von einer Seite zugänglich sind, kommen häufig die sogenannten Blindniete zu Anwendung. Sie bestehen aus einem Hohlniet, der von der Seite des späteren Schließkopfs her von einem Nietzäpfen mit auf dem Nietschaft des Hohlniets aufliegendem Nietkopf und mit einem auf der Setzkopfseite herausragendem Zugdorn durchsetzt wird. Der Zugdom ist-über eine Sollbruchstelle mit dem Nietzapfen verbunden. Zum Vernieten wird der Blindniet mit der Schließkopfseite voraus in die Nietlöcher gesteckt, bis der Setzkopf des Hohlniets aufsitzt. Danach wird durch kräftigen Zug am Zugdorn der Nietzapfen in den Hohlniet eingezogen und dabei der Nietschaft aufgespreizt und zur Bildung des Schließkopfes verformt, wobei der Zugdom an seiner Sollbruchstelle schließlich abreißt. Die für den Nietvorgang notwendige Zugkraft kann nur mit kraftverstärkenden, häufig pneumatisch oder hydraulisch angetriebenen Spezialwerkzeugen aufgebracht werden. Nachteilig ist außerdem der durch die abgerissenen Zugdorne anfallende Abfall und dessen notwendige Beseitigung.

Die bekannten Niete eignen sich jeweils nur für bestimmte Nietlöcher, an deren Form (Rundloch, Langloch, Viereckloch) und Größe der Nietschaft angepaßt sein muß, um eine sichere Verbindung zu erhalten. An die Dicke der zu verbindenden Teile muß die Länge des Nietschaftes angepaßt sein. Für unterschiedliche Anwendungen sind also eine Vielzahl von Nietgrößen und Nietformen notwendig.

Aufgabe der Erfindung ist es, einen Spreizniet, insbesondere aus Metall, zu schaffen, der universell einsetzbar und leicht und einfach zu verarbeiten ist. Er soll sich an unterschiedliche Formen von Nietlöchern und unterschiedliche Befestigungsdicken der zu verbindenden Teile von selbst anpassen.

Erfindungsgemäß wird dies dadurch erreicht, dass der Spreizniet aus zwei Teilen, einem Spreizdübel und einem Einschlagstift besteht, die in vormontiertem Zustand des Spreizniets unverlierbar miteinander verbunden sind, dass der Spreizdübel in seiner Mitte ein an die Form des Einschlagstifts angepasstes Einsteckloch, zwei seitlich in entgegengesetzter Richtung abragende Auflageflügel und zwei rechtwinklig nach unten ragende, einander gegenüberstehende Spreizschenkel aufweist, dass der bei der Vormontage in das Einsteckloch eingeschobene Einschlagstift um eine gewisses Maß aus dem Spreizdübel herausragt, aber mit den beiden Spreizschenkeln in Eingriff steht und dass nach dem Einschlagen des Einschlagstifts die Spreizschenkel vom Einschlagstift auseinandergespreizt sind.

Dieser Spreizniet ist, nachdem er in die vorbereiteten Nietlöcher zweier zu verbindender Bauteile eingesteckt wurde, in einfacher Weise ohne Zuhilfenahme von Spezialwerkzeugen nur durch einen Hammerschlag auf den Einschlagstift zu verarbeiten; er ist besonders dort einsetzbar, wo Nietstellen nur von einer Seite zugänglich sind. Wenn die Spreizschenkel beim Einschlagen des Einschlagstifts aufgespreizt werden, können sie je nach Dicke der zu verbindenden Bauteile in unterschiedlicher Höhe abknicken..Er kann sich somit an Nietlöcher unterschiedlicher Größe und Form sowie an Bauteile unterschiedlicher Dicke anpassen, so dass der Spreizniet nur noch in wenigen unterschiedlichen Größen hergestellt werden muss.

Nach einer bevorzugten Ausführungsform der Erfindung ist das Einsteckloch ein Langloch, und der Einschlagstift besteht aus einer Platine, die an ihrem einen Ende zwei entgegengesetzt im rechten Winkel abgebogene, durch einen Schlitz voneinander getrennte Flügel und an ihrem anderen Ende eine durch Abstufungen abgesetzte, beim Einschieben des Einschlagstifts in das Langloch mit den Spreizschenkeln des Spreizdübels in Eingriff gelangende Spitze aufweist. Spreizdübel und Einschtagstift sind so vormontiert und unverlierbar miteinander verbunden, wodurch die Verarbeitung des Spreizniets sehr erleichtert wird.

Vorzugsweise weist der Einschlagstift eine mittige, bis zur oder bis in die Spitze reichende Verstärkungsrippe auf und das zwischen den Spreizschenkeln des Spreizdübels längs verlaufende Langloch ist in seiner Mitte mit beidseitigen, der Verstärkungsrippe entsprechenden Ausbuchtungen versehen. Damit wird der Einschlagstift sowohl bei der Vormontage als auch beim Nietvorgang gut geführt.

Bevorzugt haben die Spreizschenkel des Spreizdübels streifenförmige Form und sind mit ihren freien Enden nach innen derart auf sich zurückgebogen, dass der Einschlagstift nach der Vormontage mit seinen Abstufungen auf den Endkanten der Spreizschenkel aufsitzt. So bewirken die Abstufungen beim Einschlagen des Einschlagstifts das Aufspreizen der Spreizschenkel.

Die Spreizschenkel können in ihren Endkanten eine mittige Aussparung aufweisen, in denen der Einschlagstift mit seinen Abstufungen nach der Vormontage dann sicher aufsitzt.

Wenn an den Abstufungen des Einschlagstifts in Verlängerung der Außenkanten Schulterspitzen angeformt sind, wird ein unbeabsichtigtes Abgleiten der Spreizschenkel von den Abstufungen verhindert.

Nach der bevorzugten Ausführungsform der Erfindung weisen die Spreizschenkel nahe an ihren Endkanten ein mittiges Loch, vorzugsweise ein Viereckloch, auf, in das der Einschlagstift nach der Vormontage mit an seiner dreieckförmigen Spitze beidseitig ausgebildeten Ohren eingreift; so sind der Spreizdübel und der Einschlagstift unverlierbaw miteinander verbunden.

Die Spreizschenkel können an ihren Seitenkanten eine Zahnung aufweisen, was den Sitz des Spreizniets in den Nietlöchern der zu verbindenden Bauteile verbessert.

Nach dem Nietvorgang, d.h. nach dem Einschlagen des Einschlagstifts, liegt dieser mit seinen Flügeln auf den. Auflageflügeln des Spreizdübels und diese auf dem einen der zu verbindenden Bauteile auf; die aufgespreizten Spreizschenkel hintergreifen mit ihren Endkanten bzw. der in ihren Endkanten jeweils vorgesehenen Aussparung die an der Spitze des Einschlagstifts ausgebildeten Ohren, und die an den Abstufungen ausgebildeten Schulterspitzen greifen in die (Viereck-)Löcher der Spreizschenkel ein. Somit werden die Spreizschenkel in ihrer gespreizten Stellung festgehalten und die Verbindung der Bauteile ist gesichert.

Ein erfindungsgemäßes Verfahren zur Herstellung eines solchen Spreizniets besteht bevorzugt aus folgenden Verfahrensschritten:
- aus einem Metallband wird ein Streifen mit in der Mitte beidseitig im rechten Winkel abstehenden, mit dem Streifen jeweils durch einen kurzen und verhältnismäßig schmalen Steg verbundenen Auflageflügeln ausgestanzt;
- dabei werden gleichzeitig in der Mitte des Streifens ein in Längsrichtung des Streifens verlaufendes Langloch, dazu in jeweils gleichem Abstand zwei Rundlöcher und zu diesen wieder gleichmäßig beabstandet zwei Löcher, vorzugsweise Vierecklöcher ausgestanzt;
- zur Formung des Spreizdübels werden die freien Enden des Streifens um die Mitte der Rundlöcher um ca. 180° zurückgebogen und danach der Streifen in jeweils gleichem und verhältnismäßig geringem Abstand zu dem Langloch um ca. 90° abgebogen und so zu zwei Spreizschenkeln geformt;
- ebenfalls aus einem Metallband wird eine schlüsselförmige Platine mit an einem Ende spiegelbildlich abstehenden, durch einen Schlitz voneinander getrennten Flügeln und mit einer am anderen Ende durch Abstufungen abgesetzten, dreieckförmigen Spitze mit beidseitig abragenden Ohren und einem kurzen Hals zwischen der Platine und ihrer Spitze ausgestanzt;
- zur Formung des Einschlagstiftes werden diese Flügel in entgegengesetzter Richtung im rechten Winkel abgebogen;
- der Einschtagstift wird von oben in das mittige Langloch des Spreizdübels eingeschoben, bis die seitlich von der Spitze abragenden Ohren in die Vierecklöcher der Spreizschenkel des Spreizdübels eingreifen und die Endkanten der Spreizschenkel auf den Abstufungen des Einschlagstifts aufstoßen; damit ist der Spreizniet vormontiert.

Die beiden Teile des Spreizniets können so einfach und kostengünstig aus einem Metallband in einem einzigen Verfahrensschritt ausgestanzt und danach durch wenige, einfache Biegungen endgültig geformt und zum Spreizniet vormontiert werden.

An den Abstufungen der Platine werden vorteilhaft deren Seitenkanten fortsetzende Schulterspitzen belassen, um später die Auflage der Seitenkanten der Spreizschenkel auf den Abstufungen zu sichern und einen Eingriff mit den Vierecklöchern zu garantieren.

Wenn in die Endkanten des Streifens mittige Aussparungen gestanzt werden, kann das Aufliegen der Seitenkanten auf den Abstufungen noch besser gesichert werden.

Wenn in den Streifen zwischen dem Langloch und den Rundlöchern Verstärkungsrillen oder Verstärkungsrippen eingeprägt werden, erhält der fertige Spreizniet mehr Stabilität und Festigkeit.

Zum selben Zweck können die Umfangskanten der Auflageflügel des Spreizdübels und der Flügel des Einschlagstifts umgebördelt werden.

Werden die Seitenkanten des Streifens zwischen dem Langloch und den Rundlöchern leicht hochgebogen und mit einer Zahnung versehen, erhält der Spreizniet später einen besseren Sitz in den Nietlöchern der zu verbindenden Bauteile.

In die Platine des Einschlagstifts kann eine längs verlaufende Verstärkungsrippe eingeprägt werden und in den Streifen des Spreizdübels ein Langloch mit seitlichen, an diese Verstärkungsrippen angepassten Ausbuchtungen eingestanzt werden, so dass der Einschlagstift sowohl bei der Vormontage als auch beim Nietvorgang sicher geführt wird.

Die Erfindung wird anhand der anhängenden Zeichnung genauer beschrieben; es zeigen
- Fig. 1: ein Zwischenprodukt bei der Herstellung des einen ersten Teil des fertigen Spreizniets bildenden Spreizdübels,
- Fig. 2: eine Seitenansicht des fertig geformten Spreizdübels,
- Fig. 3: eine Schnittänsicht durch den Spreizdübel gemäß Fig. 2 entlang der Schnittlinie III-III in Fig. 2,
- Fig. 4: eine Draufsicht auf den Spreizdübel gemäß Fig. 3,
- Fig. 5: ein Zwischenprodukt bei der Herstellung des den zweiten Teil des fertigen Spreizniets bildenden Einschlagstifts,
- Fig. 6: eine Seitenansicht des fertig geformten Einschlagstifts,
- Fig. 7: die Seitenansicht des gegenüber Fig. 6 um 90° gedrehten Einschlagstifts,
- Fig. 8: die Draufsicht auf den Einschlagstift gemäß Fig. 6,
- Fig. 9: die Draufsicht auf den aus dem Spreizdübel gemäß Fig. 2 bis 4 und dem Einschlagstift gemäß Fig. 6 bis 8 zusammengefügten, erfindungsgemäßen Spreizniet in einem Nietloch,
- Fig. 10: die Seitenansicht des Spreizniets gemäß Fig. 9 in Richtung des Pfeiles P in noch unverarbeiteten Zustand,
- Fig. 11: einen Schnitt durch zwei mit einem erfindungsgemäßen Spreizniet zu verbindende bzw. verbundene Bauteile, wobei der Spreizniet gegenüber Fig. 10 um 90° gedreht erscheint und in der einen Hälfte in noch unverarbeiteten Zustand, in der anderen Hälfte in genietetem Zustand wiedergegeben ist und
- Fig. 12: eine Schnittansicht gemäß Fig. 11 jedoch mit von den in Fig. 11 verschiedenen zu verbindenden bzw. verbundenen Bauteilen.

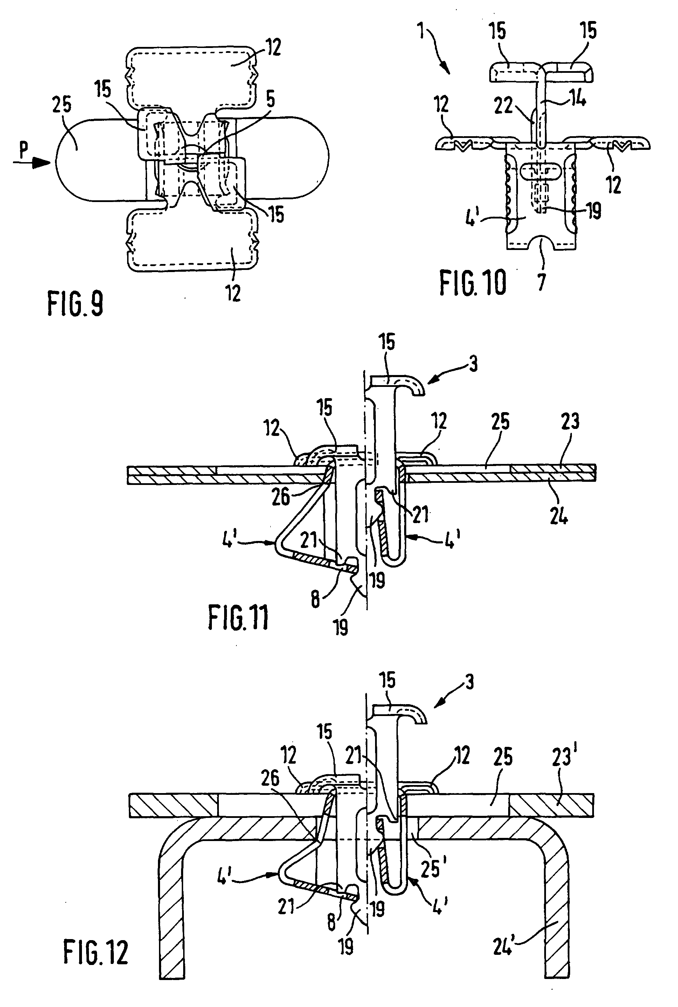

Der Spreizniet **1** besteht aus zwei Teilen, dem Spreizdübel **2** und dem Einschlagstift **3,** die, wie weiter unten noch genauer beschrieben wird, zum Spreizniet **1** gemäß Fig.10 zusammengefügt werden.

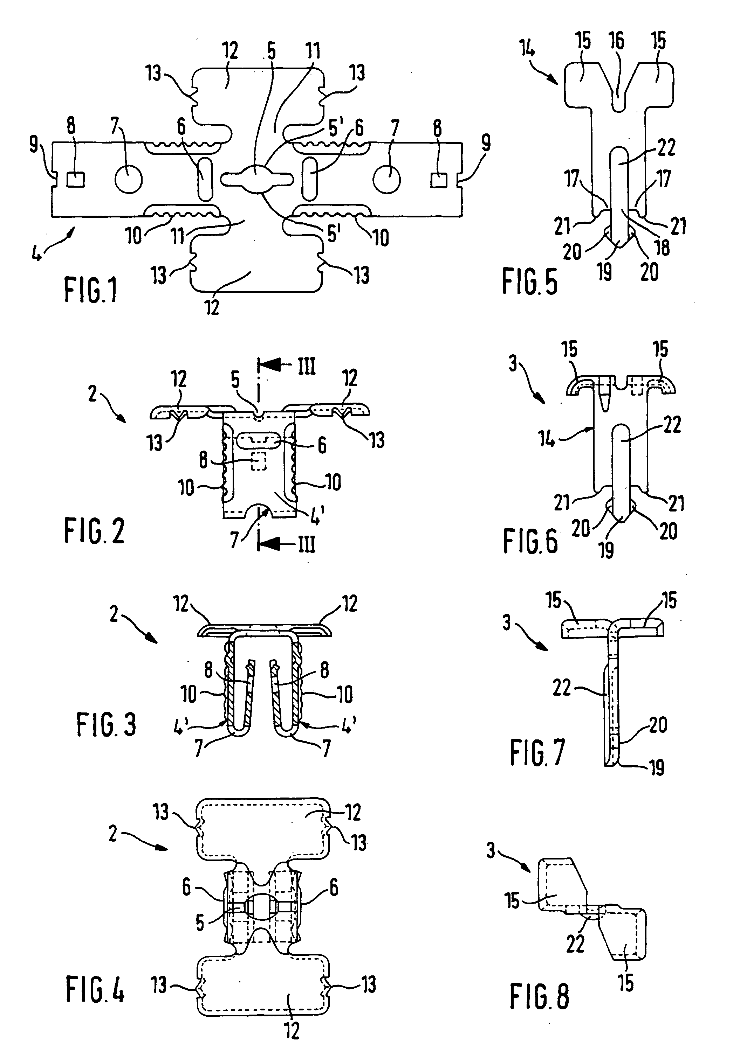

Fig. 1 zeigt ein Vorprodukt bei der Herstellung des Spreizdübels **2,** bevor dieser endgültig geformt wird. Aus einem metallband wurde ein Streifen **4** ausgestanzt und. dabei gleichzeitig wie folgt gelocht und geformt. In der Mitte des Streifens **4** befindet sich ein sich. in Längsrichtung des Streifens **4** erstreckendes Langloch **5**, das wiederum in seiner Mitte nach beiden Seiten, wie bei **5'** dargestellt, ausgebuchtet ist. Beidseitig neben dem Langloch **5** sind quer zur Längserstreckung des Streifens **4** Verstärkungsrillen **6** eingeprägt und in jeweils gleichem Abstand dazu auf der Mittellinie liegend Rundlöcher **7** und zu diesen wiederum gleichmäßig beabstandet Vierecklöcher **8** ausgestanzt. In beiden Endkanten des Streifens **4** sind außerdem mittige Aussparungen **9** vorgesehen. Die Seitenkanten sind im Bereich zwischen dem Langloch **5** und den Rundlöchem **7** ein wenig hochgebogen und mit einer Zahnung **10** versehen. Von der Mitte des Streifens **4** erstreckt sich nach beiden Seiten jeweils ein verhältnismäßig schmaler und kurzer Steg **11,** und beide Stege **11** erweitern sich zu spiegelbildlich gleichen Auflageflügeln **12.** Die Schmalseiten dieser Auflageflügel **12** sind mit Zacken **13** versehen. Zur Versteifung sind die Ränder der Auflageflügel **12** umgebördelt.

Um den Spreizdübel **2** (siehe Fig. 2 bis 4) zu formen, werden die freien Enden des Streifens **4** um die Mitte der Rundlöcher **7** um 180° zurückgebogen, und danach wird der Streifen **4** im Bereich zwischen dem Langloch **5** und den Verstärkungsrillen **6** nochmals um 90° abgebogen (vergl. insbesondere Fig. 3) und so zu Spreizschenkeln **4'** geformt.

Die Fig. 5 zeigt ein Vorprodukt bei der Herstellung des Einschlagstifts **3** gemäß Fig. 6 bis 8. Auch er wird aus einem Metallband als schmale, schlüsselförmige Platine **14** ausgestanzt, deren Breite der Länge des Langlochs **5** im Spreizdübel **2** entspricht.

An ihrem oberen Ende weist sie zwei spiegelbildlich gleiche Flügel **15** auf, welche durch einen V-förmigen Schlitz **16** voneinander getrennt sind. Am unteren Ende ist durch eine beidseitige Abstufung **17** ein schmaler Hals **18** angeformt, der in eine dreieckförmige Spitze **19** mit seitlich abstehenden Ohren **20** übergeht. An den Abstufungen **17** sind in Verlängerung der Außenkanten zwei Schulterspitzen **21** ausgebildet. In ihrer Mitte weist die Platine **14** eine längs verlaufende Verstärkungsrippe **22** auf, die bis in die Spitze **19** reicht und in ihrem Querschnitt an die Ausbuchtungen **5'** des Langlochs **5** angepaßt ist.

Zur Formung des fertigen Einschlagstiftes **3** gemäß Fig. 6 bis 8 werden die Flügel **15** umgebördelt und in entgegengesetzter Richtung um 90° umgebogen (siehe insb. Fig. 8).

Der Spreizdübel **2** und der Einschlagstift **3** werden in bekannter Weise gehärtet und oberflächenbehandelt und danach; vorzugsweise mit Hilfe eines Montageautomaten zu dem Spreizniet **1** gemäß Fig. 10 vormontiert. Der Einschlagstift **3** wird in das Langloch **5** des Spreizdübels **2** eingedrückt, wobei die Verstärkungsrippe **22** in die Ausbuchtungen **5'** des Langlochs **5** paßt. Der Einschlagstift **3** wird dabei an seinen Seitenfläche und seiner Verstärkungsrippe **22** so in dem Langloch **5** und dessen Ausbuchtungen **5'** geführt, dass die dreieckige Spitze **19** im Bereich der Ausparungen **9** an den freien Enden des zu den Spreizschenkel **4'** geformten Streifens **4,** diese leicht auseinanderdrückt bis ihre Ohren **20** in die Vierecklöcher **8** (vergl. Fig. 3) einrasten und die freien Enden mit den Aussparungen **9** hinter den Schulterspitzen **21** auf den Abstufungen **17** aufstoßen. Spreizdübel **2** und Einschlagstift **3** sind so unverlierbar miteinander verbunden, und der Spreizniet **1** ist damit fertig vormontiert und kann zur Verarbeitung ausgeliefert werden. Die Fig. 9, 11 und 12 zeigen den bestimmungsgemäßen Einsatz des Spreizniets **1** zur Verbindung zweier Bauteile **23** und **24** bzw. **23'** und **24'.**

Der Spreizniet 1 wird in die dafür vorgesehenen Nietlöcher **25** oder **25'** der zu verbindenden Bauteile **23** und **24** oder **23'** und **24'** eingesteckt, wobei die Auflageflügel **12** des Spreizdübels **2** auf dem oberen Bauteil **23** bzw. **23'** zur Auflage kommen. Danach wird die Verbindung mit einem einfachen Hammerschlag auf die Flügel **15** des Einschlagstifts **3** hergestellt. Dabei werden die Spreizschenkel **4'** auseinandergedrückt und in dieser gespreizten Position festgehalten, wie es in den Fig. 11 und 12 dargestellt ist.

Die Fig. 11 und 12 sind mittig gespalten und zeigen jeweils in ihrer rechten Hälfte den in die Nietlöcher **25** bzw. **25'** der zu verbindenden Bauteil **23** und **24** bzw. **23'** und **24'** eingesteckten aber noch unvernieteten Spreizniet **1** und in ihrer linken Hälfte den vernieteten Spreizniet **1.** Durch den Hammerschlag wird der Einschlagstift **3** im Spreizdübel **2,** wie erwähnt, geführt nach unten verschoben; die Spreizschenkel **4'** werden dabei von den Abstufungen **17** aufgespreizt und soweit nach außen gebogen, bis die Spitze **19** über das freie Ende der Spreizschenkel **4'** rutscht und diese mit ihren Aussparungen **9** hinter den Ohren **20** einrasten und außerdem die Schulterspitzen **21** in die Vierecklöcher **8** der Spreizschenkel **4'** eingreifen, wodurch die Spreizschenkel **4'** in dieser gespreizten Stellung gehalten werden. Entsprechend der Dicke der zu verbindenden Bauteile **23, 24** oder **23', 24'** und in gewissem Ausmaß auch der Weite der Nietlöcher **25** oder **25'** werden bei diesem Spreizvorgang die Spreizschenkel **4'** auch an der Kante des Nietlochs **25** des unteren Bauteils **24** oder **24'** bei **26** winklig abgebogen oder geknickt, so dass eine feste Verbindung der beiden Bauteile **23, 24** bzw. **23',24'** erreicht wird.

Der beschriebene Spreizniet 1 kann vorteilhaft die meisten üblichen Verbindungen die herkömmlich mit Schrauben, Scheiben und Muttern vorgenommen werden, ersetzen, sofern eine unlösbare Verbindung gewünscht oder nicht störend ist. Er besitzt alle Vorteile und Verwendungsmöglichkeiten bekannter Niete, insbesondere auch der bekannten Kunststoff-Spreizniete in verbesserter Form und noch weitere zusätzliche Vorteile.
- Er kann an Verbindungsstellen eingesetzt werden, die nur von einer Seite zugänglich sind und ist dabei auf einfache Art ohne Zuhilfenahme von Spezialwerkzeugen nur mit einem Hammerschlag zu verarbeiten;
- es entstehen bei seiner Verarbeitung keine Abfälle, also auch keine Entsorgungsprobleme, es müssen keine Maßnahmen getroffen werden, Abfälle, wie abgerissene Zugdorne, aufzufangen;
- der Spreizniet kann sich an Nietlöcher unterschiedlicher Größe und Form, wie Langlöcher, Rundlöcher, Vierecklöcher, und an unterschiedliche Dicken der zu verbindenden Bauteile anpassen, so dass er nur in einer oder allenfalls in wenigen Größen hergestellt werden muß;
- es werden höhere Auszugskräfte als bei herkömmlichen Nieten erreicht:
- er ist im Gegensatz zu den bekannten Kunststoff-Spreiznieten feuersicher, denn er kann vorzugsweise aus Metall hergestellt werden;
- seine beiden Teile, Spreizdübel **2** und Einschlagstift **3** sind nach der Vormontage unverlierbar miteinander verbunden, wodurch er leicht und problemlos zu verarbeiten ist.

## Patentansprüche

1. Spreizniet, **dadurch gekennzeichnet,**
**dass** er aus zwei Teilen, einem Spreizdübel **(2)** und einem Einschlagstift **(3)** besteht, die in vormontiertem Zustand des Spreizniets **(1)** unverlierbar miteinander verbunden sind, dass der Spreizdübel **(2)** in seiner Mitte ein an die Form des Einschlagstifts **(3)** angepasstes Einsteckloch **(5),** zwei seitlich in entgegengesetzter Richtung abragende Auflageflügel **(12)** und zwei rechtwinklig nach unten ragende, einander gegenüberstehende Spreizschenkel **(4')** aufweist, dass der bei der Vormontage in das Einsteckloch **(5)** eingeschobene Einschlagstift **(3)** um eine gewisses Maß aus dem Spreizdübel **(2)** herausragt, aber mit den beiden Spreizschenkeln **(4')** in Eingriff steht und dass nach dem Einschlagen des Einschlagstifts **(3)** die Spreizschenkel **(4')** vom Einschlagstift **(3)** auseinandergespreizt sind.

2. Spreizniet nach Anspruch 1, **dadurch gekennzeichnet, dass** das Einsteckloch **(5)** ein Langloch **(5)** ist und der Einschlagstift **(3)** aus einer Platine **(14)** besteht, die an ihrem einen Ende zwei entgegengesetzt im rechten Winkel abgebogene, durch einen Schlitz **(16)** voneinander getrennte Flügel **(15)** und an ihrem anderen Ende eine durch Abstufungen **(17)** abgesetzte, beim Einschieben des Einschlagstifts **(3)** in das Langloch **(5)** mit den Spreizschenkeln **(4')** des Spreizdübels **(2)** in Eingriff gelangende Spitze **(19)** aufweist.

3. Spreizniet nach Anspruch 2, **dadurch gekennzeichnet, dass** der Einschlagstift **(3)** eine mittige, bis zur oder bis in die Spitze **(19)** reichende Verstärkungsrippe **(22)** aufweist und dass das zwischen den Spreizschenkeln **(4')** des Spreizdübels **(2)** längs verlaufende Langloch **(5)** in seiner Mitte beidseitige, der Verstärkungsrippe **(22)** entsprechende Ausbuchtungen **(5')** aufweist.

4. Spreizniet nach Anspruch 2, **dadurch gekennzeichnet, dass** die Spreizschenkel **(4')** des Spreizdübels **(2)** streifenförmige Form haben und mit ihren freien Enden nach innen derart auf sich zurückgebogen sind, dass der Einschlagstift **(3)** nach der Vormontage mit seinen Abstufungen **(17)** auf den Endkanten der Spreizschenkel **(4')** aufsitzt.

5. Spreizniet nach Anspruch 4, **dadurch gekennzeichnet, dass** die Spreizschenkel **(4')** in ihren Endkanten eine mittige Aussparung **(9)** aufweisen, in denen der Einschlagstift **(3)** mit seinen Abstufungen **(17)** nach der Vormontage aufsitzt.

6. Spreizniet nach Anspruch 4 oder 5, **dadurch gekennzeichnet, dass** an den Abstufungen **(17)** des Einschlagstifts **(3)** in Verlängerung der Außenkanten Schulterspitzen **(21)** angeformt sind.

7. Spreizniet nach Anspruch 4, **dadurch gekennzeichnet, dass** die Spreizschenkel **(4')** nahe an ihren Endkariten ein mittiges Loch, vorzugsweise ein Viereckloch **(8),** aufweisen, in das der Einschlagstift **(3)** nach der Vormontage mit an seiner dreieckförmigen Spitze **(19)** beidseitig ausgebildeten Ohren **(20)** eingreift.

8. Spreizniet nach Anspruch 4, **dadurch gekennzeichnet, dass** die Spreizschenkel **(4')** an ihren Seitenkanten eine Zahnung **(10)** aufweisen.

9. Spreizniet nach Anspruch 4, **dadurch gekennzeichnet, dass** die Spreizschenkel **(4')** Verstärkungsrippen oder Verstärkungsrillen **(6)** aufweisen.

10. Spreizniet nach Anspruch 7, **dadurch gekennzeichnet, dass** nach dem Nietvorgang, d.h. nach dem Einschlagen des Einschlagstifts **(3)** in den Spreizdübel **(2),** der Einschlagstift **(3)** mit seinen Flügeln **(15)** auf den Auflageflügeln **(12)** des Spreizdübels **(2)** aufliegt und die aufgespreizten Spreizschenkel **(4')** mit ihren Endkanten bzw. der in ihren Endkanten jeweils vorgesehenen Aussparung **(9)** die an der Spitze **(19)** des Einschlagstifts **(3)** ausgebildeten Ohren **(20)** hintergreifen und die an den Abstufungen **(17)** ausgebildeten Schulterspitzen **(21)** in die (Viereck-)Löcher **(8)** der Spreizschenkel **(4')** eingreifen.

11. Verfahren zur Herstellung eines Spreizniets, **dadurch gekennzeichnet,**
• **dass** aus einem Metallband ein Streifen **(4)** mit in der Mitte beidseitig im rechten Winkel abstehenden, mit dem Streifen **(4)** jeweils durch einen kurzen und verhältnismäßig schmalen Steg **(11)** verbundenen Auflageflügeln **(12)** ausgestanzt wird,
• **dass** dabei in der Mitte des Streifens **(4)** ein in Längsrichtung des Streifens **(4)** verlaufendes Langloch **(5),** dazu in jeweils gleichem Abstand zwei Rundlöcher **(7)** und zu diesen wieder gleichmäßig beabstandet zwei Löcher, vorzugsweise Vierecklöcher **(8)** ausgestanzt werden,
• **dass** zur Formung eines Spreizdübels **(2)** die freien Enden.des Streifens **(4)** um die Mitte der Rundlöcher **(7)** um ca. 180° zurückgebogen werden und danach der Streifen **(4)** in jeweils gleichem und verhältnismäßig geringem Abstand zu dem Langloch **(5)** um 90° abgebogen und so zu zwei Spreizschenkeln **(4')** geformt wird,
• **dass** ebenfalls aus einem Metallband eine schlüsselförmige Platine **(14)** mit an einem Ende spiegelbildlich abstehenden, durch einen Schlitz **(16)** voneinander getrennten Flügeln **(15)** und mit einer am anderen Ende durch Abstufungen **(17)** abgesetzten, dreieckförmigen Spitze **(19)** mit beidseitig abragenden Ohren **(20)** und einem Hals **(18)** zwischen der Platine **(14)** und ihrer Spitze **(19)** ausgestanzt wird,
• **dass** zur Formung eines Einschlagstiftes **(3)** diese Flügel **(15)** in entgegengesetzter Richtung im rechten Winkel abgebogen werden und
• **dass** der Einschlagstift **(3)** von oben in das mittige Langloch **(5)** des Spreizdübels **(2)** eingeschoben wird, bis die seitlich von der Spitze **(19)** abragenden Ohren **(20)** in die Vierecklöcher **(8)** der Spreizscherikel **(4')** des Spreizdübels **(2)** eingreifen und die Endkanten der Spreizschenkel **(4')** auf den Abstufungen **(17)** des Einschlagstifts **(3)** aufstoßen, wonach der Spreizniet **(1)** vormontiert ist.

12. Verfahren nach Anspruch 11, **dadurch gekennzeichnet, dass** an den Abstufungen **(17)** der Platine **(14)** deren Seitenkanten fortsetzende Schulterspitzen **(21)** belassen werden.

13. Verfahren nach Anspruch 11, **dadurch gekennzeichnet, dass** in die Endkanten des Streifens **(4)** mittige Aussparungen **(9)** gestanzt werden.

14. Verfahren nach Anspruch 11, **dadurch gekennzeichnet, dass** in den Streifen **(4)** zwischen dem Langloch **(5)** und den Rundlöchern **(7)** Verstärkungsrillen **(6)** oder Verstärkungsrippen eingeprägt werden.

15. Verfahren nach Anspruch 11, **dadurch gekennzeichnet, dass** die Umfangskanten der Auflageflügel **(12)** des Spreizdübels **(2)** und der Flügel **(15)** des Einschlagstifts **(3)** umgebördelt und mit Zacken **(13)** versehen werden.

16. Verfahren nach Anspruch 11, **dadurch gekennzeichnet, dass** die Seitenkanten des Streifens **(4)** zwischen dem Langloch **(5)** und den Rundlöchern **(7)** leicht hochgebogen und mit einer Zahnung **(10)** versehen werden.

17. Verfahren nach Anspruch 11, **dadurch gekennzeichnet, dass** in die Platine **(14)** des Einschlagstifts **(3)** eine mittig längs verlaufende Verstärkungsrippe **(22)** eingeprägt wird und in den Streifen **(4)** des Spreizdübels **(2)** ein Langloch **(5)** mit seitlichen, an diese Verstärkungsrippen **(22)** angepassten Ausbuchtungen **(5')** eingestanzt wird.

## Claims

1. Expanding rivet, **characterized in that**
it consists of two parts, an expansion peg **(2)** and a drive pin **(3),** which, in the preassembled state of the expanding rivet **(1),** are permanently connected together, **in that** the expansion peg **(2)** has, in its centre, an insertion hole **(5)** adapted to the shape of the drive pin **(3),** two support wings **(12)** projecting laterally in opposite directions and two opposite-facing expansion legs **(4')** projecting downwards at right angles, **in that** the drive pin **(3)** pushed into the insertion hole **(5)** upon pre-assembly projects to a certain degree from out of the expansion peg **(2),** but engages with the two expansion legs **(4')** and **in that**, after the drive pin **(3)** is driven in, the expansion legs **(4')** are spread apart by the drive pin **(3).**

2. Expanding rivet according to claim 1, **characterized in that** the insertion hole **(5)** is an oblong hole **(5)** and the drive pin **(3)** consists of a plate **(14),** which has at its one end two opposed wings **(15),** bent at right angles, separated from each other by a slit **(16)** and at its other end a tip **(19)** offset by steps **(17),** engaging with the expansion legs **(4')** of the expansion peg **(2)** upon the insertion of the drive pin **(3)** into the oblong hole **(5).**

3. Expanding rivet according to claim 2, **characterized in that** the drive pin **(3)** has a central reinforcement rib **(22)** extending up to or into the tip **(19)** and **in that** the oblong hole **(5)** running longitudinally between the expansion legs **(4')** of the expansion peg **(2)** has, in its centre, bulges **(5')** on both sides corresponding to the reinforcement rib **(22).**

4. Expanding rivet according to claim 2, **characterized in that** the expansion legs **(4')** of the expansion peg **(2)** are in strip form and are bent backwards inwardly with their free ends such that, after pre-assembly with its steps **(17),** the drive pin **(3)** rests on the end edges of the expansion legs **(4').**

5. Expanding rivet according to claim 4, **characterized in that** the expansion legs **(4')** have a central recess **(9)** in their end edges, in which the drive pin **(3)** with its steps **(17)** sits after pre-assembly.

6. Expanding rivet according to claim 4 or 5, **characterized in that** shoulder tips **(21)** are moulded onto the steps **(17)** of the drive pin **(3)** in extension of the outer edges.

7. Expanding rivet according to claim 4, **characterized in that** the expansion legs **(4')** have, near to their end edges, a central hole, preferably a rectangular hole **(8),** in which the drive pin **(3)** engages after pre-assembly with ears **(20)** developed on both sides at its triangular tip **(19).**

8. Expanding rivet according to claim 4, **characterized in that** the expansion legs **(4')** have a toothing **(10)** at their side edges.

9. Expanding rivet according to claim 4, **characterized in that** the expansion legs **(4')** have reinforcement ribs or reinforcement channels **(6).**

10. Expanding rivet according to claim 7, **characterized in that** after the riveting process, i.e. after the drive pin **(3)** is driven into the expansion peg **(2),** the drive pin **(3)** lies with its wings **(15)** on the support wings **(12)** of the expansion peg **(2)** and the expanded expansion legs **(4')** engage with their end edges or the recess **(9)** provided in each of their end edges behind the ears **(20)** developed at the tip **(19)** of the drive pin **(3)** and the shoulder tips **(21)** formed on the steps **(17)** engage in the (rectangular) holes **(8)** of the expansion legs **(4').**

11. Process for the production of an expanding rivet, **characterized in that**
• a strip **(4)** with support wings **(12)** offset in the middle on both sides at right angles, each connected to the strip **(4)** by a short and relatively narrow web **(11),** is stamped out of a metal band,
• an oblong hole **(5)** running in longitudinal direction of the strip **(4),** plus two round holes **(7)** each equidistant thereto and two holes, preferably rectangular holes **(8),** again at a uniform distance therefrom, are stamped in the middle of the strip **(4),**
• to shape an expansion peg **(2)** the free ends of the strip **(4)** are bent back about the middle of the round holes **(7)** by approx. 180° and then the strip **(4)** is in each case at the same and relatively small distance from the oblong hole **(5)** bent by 90° and thus shaped into two expansion legs **(4'),**
• a key-shaped plate **(14)** with at one end mirror-imaging wings **(15),** separated from each other by a slit **(16)** and with at the other end a triangular tip **(19)** offset by steps **(17)** with ears **(20)** projecting on both sides and a neck **(18)** between the plate **(14)** and its tip **(19)** is likewise stamped out of a metal band
• to shape a drive pin **(3)** these wings **(15)** are bent at right angles in opposite directions and
• the drive pin **(3)** is pushed from above into the central oblong hole **(5)** of the expansion peg **(2)** until the ears **(20)** projecting laterally from the tip **(19)** engage in the rectangular holes **(8)** of the expansion legs **(4')** of the expansion peg **(2)** and the end edges of the expansion leg **(4')** push open on the steps **(17)** of the drive pin **(3),** after which the expanding rivet **(1)** is preassembled.

12. Process according to claim 11, **characterized in that**, at the steps **(17)** of the plate **(14),** shoulder tips **(21)** continuing the side edges thereof are left.

13. Process according to claim 11, **characterized in that** central recesses **(9)** are stamped into the end edges of the strip **(4).**

14. Process according to claim 11, **characterized in that** reinforcement channels **(6)** or reinforcement ribs are impressed into the strip **(4)** between the oblong hole **(5)** and the round holes **(7).**

15. Process according to claim 11, **characterized in that** the peripheral edges of the support wings **(12)** of the expansion peg **(2)** and the wing **(15)** of the drive pin **(3)** are edged and provided with crimping **(13).**

16. Process according to claim 11, **characterized in that** the side edges of the strip **(4)** are curved slightly upwards between the oblong hole **(5)** and the round holes **(7)** and provided with a toothing **(10).**

17. Process according to claim 11, **characterized in that** a reinforcement rib **(22)** running longitudinally along the middle is impressed into the plate **(14)** of the drive pin **(3)** and an oblong hole **(5)** is stamped into the strip **(4)** of the expansion peg **(2)** with lateral bulges **(5')** adapted to these reinforcement ribs **(22).**

## Revendications

1. Rivet à segments expansibles, **caractérisé en ce qu'**il se compose de deux parties, à savoir une cheville expansible (2) et un piton à enfoncer (3), qui sont reliés ensemble de manière imperdable par un assemblage préalable, que la cheville expansible (2) comporte en son centre un orifice d'emmanchement (5) adapté à la géométrie du piton à enfoncer (3), deux ailettes d'appui (12) faisant latéralement saillie, diamétralement opposées et deux pattes expansibles (4'), respectivement opposées, faisant saillie vers le bas, que le piton à enfoncer (3), inséré dans l'orifice d'emmanchement (5) lors de l'assemblage préalable, fait saillie hors de la cheville expansible (2) dans une certaine proportion, mais se trouve en prise d'engagement avec les deux pattes expansibles (4'), et qu'après l'enfoncement du piton à enfoncer (3) les pattes expansibles (4') sont respectivement repoussées en position d'écartement sous l'action du piton à enfoncer (3).

2. Rivet à segments expansibles selon la revendication 1, **caractérisé en ce que** l'orifice d'emmanchement (5) est un trou oblong (5) et que le piton à enfoncer (3) consiste en un flan (14) qui comporte, à une de ses extrémités, deux ailettes (15) repliées en angle droit, respectivement séparées par une fente (16) et au niveau de son autre extrémité une portion en pointe (19) présentant des décrochements (17) et qui, lors de l'enfoncement dans le trou oblong (5) du piton à enfoncer (3), vient en prise d'engagement avec les pattes expansibles (4') de la cheville expansible (2).

3. Rivet à segments expansibles selon la revendication 2, **caractérisé en ce que** le piton à enfoncer (3) comporte une nervure de renforcement (22) s'étendant jusque vers ou jusque dans la portion en pointe (19) et **en ce que** le trou oblong (5) s'étendant longitudinalement entre les pattes expansibles (4') de la cheville expansible (2) est muni de part et d'autre, au niveau de sa partie centrale, de renflements (5') correspondant à la nervure de renforcement (22).

4. Rivet à segments expansibles selon la revendication 2, **caractérisé en ce que** les pattes expansibles (4') de la cheville expansible (2) ont de préférence la forme d'une lamelle et sont, au niveau de leurs extrémités libres, repliées sur elles-mêmes vers l'intérieur dans des conditions telles que le piton à enfoncer (3), une fois le montage préalable effectué, est en contact d'appui, au niveau de ses décrochements (17), sur les arêtes d'extrémité des pattes expansibles (4').

5. Rivet à segments expansibles selon la revendication 4, **caractérisé en ce que** les pattes expansibles (4') présentent, au niveau de leurs arêtes d'extrémité, un évidement central (9) dans lequel le piton à enfoncer (3) repose en contact d'appui par ses décrochements (17), dans sa position d'assemblage préalable.

6. Rivet à segments expansibles selon la revendication 4 ou 5, **caractérisé en ce que** des pointes formant épaulements (21) sont réalisées solidaires par formage des décrochements (17) du piton à enfoncer (3), dans le prolongement des arêtes extérieures.

7. Rivet à segments expansibles selon la revendication 4, **caractérisé en ce que** les pattes expansibles (4') comportent, à proximité de leurs arêtes d'extrémité, un trou central, de préférence un trou carré (8), dans lequel le piton à monter (3) vient en prise d'encastrement, dans sa position d'assemblage préalable, par des oreilles (20) réalisées de part et d'autre de sa portion en pointe de forme triangulaire (19).

8. Rivet à segments expansibles selon la revendication 4, **caractérisé en ce que** les pattes expansibles (4') sont munies d'une denture (10) au niveau de leurs arêtes latérales.

9. Rivet à segments expansibles selon la revendication 4, **caractérisé en ce que** les pattes expansibles (4') sont munies de nervures de renforcement ou de rainures de renforcement (6)

10. Rivet à segments expansibles selon la revendication 7, **caractérisé en ce qu'**une fois l'opération de rivetage effectuée, c'est-à-dire après l'enfoncement en position du piton à enfoncer (3) dans la cheville expansible (2), le piton à enfoncer (3) repose en appui, par ses ailettes (15), sur les ailettes d'appui (12) de la cheville expansible (2) et que les pattes expansibles (4') en position d'écartement viennent, par leurs arêtes d'extrémité et l'évidement (9) respectivement prévu dans leurs arêtes d'extrémité, cramponner par derrière les oreilles (20) formées dans la portion en pointe (19) du piton à enfoncer (3) et que les pointes formant épaulements (21) prévues au niveau des décrochements (17) viennent en prise d'encastrement dans les trous (carrés) (8) des pattes expansibles (4').

11. Procédé pour la fabrication d'un rivet à segments expansibles, **caractérisé en ce que** :
• dans une bande métallique on réalise par découpage à la presse une bandelette (4) comportant de part et d'autre dans sa partie centrale des ailettes d'appui (12) faisant saillie en angle droit, respectivement raccordées à la bandelette (4) par une barrette entretoise (11) de longueur réduite et relativement étroite ;
• qu'on réalise en même temps, par découpage à la presse, dans la partie centrale de la bandelette (4), un trou oblong (5) s'étendant dans le sens longitudinal de la bandelette (4), à une distance respectivement identique de celui-ci deux trous ronds (7) et avec un intervalle d'écartement à nouveau identique par rapport à ceux-ci, deux trous, de préférence deux trous de forme carrée (8) ;
• que pour former la cheville expansible (2), on replie vers l'arrière les extrémités libres de la bandelette (4) au niveau du centre des trous ronds (7) dans une proportion d'environ 180° et qu'ensuite on replie la bandelette (4) à une distance respectivement identique et relativement réduite du trou oblong (5) à environ 90°, définissant ainsi deux pattes expansibles (4') ;
• qu'on réalise également par découpage à la presse, dans une bande métallique, un flan en forme de clef (14) comportant, à une de ses extrémités, des ailettes (15) faisant saillie de manière symétrique respectivement séparées par une fente (15) et au niveau de son autre extrémité une portion en pointe de forme triangulaire (19), présentant des décrochements (17), avec des oreilles (20) faisant saillie de part et d'autre et un collet (18), entre le flan (14) et sa portion en pointe (19) ;
• que pour former le piton à enfoncer (3), on replie ces ailettes (15) en angle droit dans le sens opposé ; et
• qu'on pousse depuis le haut le piton à enfoncer (3) dans le trou oblong central (5) de la cheville expansible (2), jusqu'à ce que les oreilles (20) faisant latéralement saille depuis la portion en pointe (19) viennent en prise d'encastrement dans les trous carrés (8) des pattes expansibles (4') de la cheville expansible (2) et que les arêtes d'extrémité des pattes expansibles (4') viennent s'appliquer contre les décrochements (17) du piton à enfoncer (3), l'assemblage préalable du rivet à segments expansibles (1) étant ainsi réalisé.

12. Procédé selon la revendication 11, **caractérisé en ce qu'**on laisse au niveau des décrochements (17) du flan (14) des pointes formant épaulements (21) qui prolongent leurs arêtes latérales.

13. Procédé selon la revendication 11, **caractérisé en ce qu'**on réalise par découpage à la presse des évidements centraux (9) dans les arêtes d'extrémité de la bandelette (4).

14. Procédé selon la revendication 11, **caractérisé en ce qu'**on réalise par formage par déformation, dans la bandelette (4) des nervures de renforcement ou de striures de renforcement (6) entre le trou oblong (5) et les trous ronds (7).

15. Procédé selon la revendication 15, caractérisé en qu'on procède à un rabattage des arêtes périphériques des ailettes d'appui (12) de la cheville expansible (2) et des ailettes (15) du piton à enfoncer (3) et qu'on réalise des dentelures sur celles-ci.

16. Procédé selon la revendication 11, **caractérisé en ce qu'**on relève légèrement les bords latéraux de la lamelle (4) entre le trou oblong (5) et les trous ronds (7) et qu'on réalise une dentelure le long de ceux-ci.

17. Procédé selon la revendication 11, **caractérisé en ce qu'**on réalise par formage déformant dans le flan (14) du piton à enfoncer (3) une nervure de renforcement centrale (22) s'étendant longitudinalement et qu'on réalise par découpage à la presse dans la bandelette (4) de la cheville expansible (2) un trou oblong (5) comportant des renflements latéraux (5'), adaptés à ces nervures de renforcement (22).
